# EUROPEAN PATENT SPECIFICATION

(11) **EP 2 397 221 B1**
(45) Date of publication and mention of the grant of the patent: **12.04.2017**
(21) Application number: 10166314.4
(22) Date of filing: 17.06.2010
(51) Int. Cl.: B01J 8/24, B01J 8/38, C08F 10/00

(54) **Control system for a gas phase reactor, a gas phase reactor for catalytic production of polyolefines, a method for catalytic productions of polyolefines and a use of the control system**
Steuerungssystem für einen Gasphasenreaktor, Gasphasenreaktor für katalytische Herstellung von Polyolefinen, Verfahren zur katalytischen Herstellung von Polyolefinen und zur Verwendung des Steuerungssystems
Système de contrôle pour réacteur à phase gazeuse, réacteur à phase gazeuse pour la production catalytique de polyoléfines, procédé de production catalytique de polyoléfines et utilisation du système de contrôle

(43) Date of publication of application: 21.12.2011
(73) Proprietor: Borealis AG, 1220 Vienna (AT)
(72) Inventor: Martin, Sanna, 00950, Helsinki (FI); Elovainio, Erno, 00430, Helsinki (FI); Zitting, Samuli, 04300, Tuusula (FI)
(74) Representative: Maikowski & Ninnemann Patentanwälte Partnerschaft mbB

(56) References cited:
- EP-A2- 0 432 555
- CH-A5- 690 492
- US-A- 3 275 809
- US-A- 3 544 540

## Description

The invention relates to a control system for a gas phase reactor according to claim 1, a gas phase reactor for catalytic production of polyolefines with a control system according to claim 5, a method for catalytic production of polyolefines according to claim 7 and a use of the control system according to claim 12.

In the operation of catalytic polyolefine production processes the formation of particle agglomerations, also termed lumps or chunks, in gas phase reactors is frequently a problem. The agglomeration of polymer particles leads to disturbances in the hydrodynamic flow regime in the gas phase reactor which is detrimental to the particle size distribution. Furthermore, the agglomeration results in a suboptimal temperature distribution within the gas phase reactor resulting in polymer particles with very different properties. Another possible problem is the formation of sticky polymer particles which might adhere to the walls of the gas phase reactor, adhere to a fluidization grid in the gas phase reactor or adhere to devices in the gas phase reactors such as stirrers. If left unattended the agglomerates eventually grow in size so that they may plug the product withdrawal lines and in the worst case may fill the entire reactor. In such cases the reactor needs to be shut down. Therefore, the detection and control of particle agglomeration within gas phase reactors is an issue.

Here the phrases agglomerated particles, lumps and chunks are used synonymously and denote aggregates which have a size in one dimension of about 50 mm or more. They are irregular in shape and may be, for instance, disc-shaped aggregates of about 50×50×10 mm. They are clearly distinguishable from polymer particles which have a diameter of from about 0.05 to about 2 mm.

In EP 233 787 A1 a number of measures to detect agglomerations in fluidized bed reactors are described. One possibility is the visual detection of agglomerations through windows in the wall of the gas phase reactor which is not suitable for the automatic operation of the process. Other methods for detecting agglomerations use radioactive markers or complex devices for measuring differential pressure differences in the gas phase reactor. EP 1 106 629 A1 describes a method using a detecting rod inserted into the gas phase reactor for detecting magnetic flux fluctuations. Given the operational or structural complexity of these known methods, an efficient system for the detection and the reduction of particle agglomerations is needed.

This problem is solved by the control system according to claim 1.

The control system comprises a detection device for detecting a change in at least one operational parameter of an agitation device in the gas phase reactor. The operational parameter is selected from the vibration, torque and / or the
power consumption of the agitation device. The detection device further comprises means for the generation of at least one control signal in dependence on the change, the control signal acting on a manipulated variable of the gas phase reactor, a fluidized bed and / or the agitation device to influence (e.g. retard, stop) the formation of particle agglomerations in the gas phase reactor and / or the removal of particle agglomerations from the gas phase reactor. It has been found that changes in the operational parameter of the agitation device indicate the formation of particle agglomerations, e.g. the formation of chunks around the shaft of a stirrer. These measurements can be used as input to the control system which then automatically takes action to counteract the agglomeration by adjusting a suitable manipulated variable. Alternatively, they may cause automatically an alarm for an operator who then can start corrective actions manually.

In one embodiment the change in the at least one operational parameter is an absolute or relative deviation from previously measured operational data of the agitation device by a predefined amount. Alternatively the change can also be an absolute or relative deviation from previously measured operational data of the agitation device by a predefined amount within a predefined time and / or a rate of change in the operational data of the agitation device which exceeds a predefined criterion. Therefore, the detection device can not only measure differences between measured operational parameters and their setpoints but also the development of operational parameters over time, i.e. the rate of change. In one embodiment the change in the at least one operational parameter is a step change in the power consumption of the agitation device of more than 10% over a period of more than 30 minutes. A step change in this context does not mean a step change in the mathematical sense (i.e. an instantaneous change) since measured data will always include noise and some non-instantaneous responses. Typically in real processes the step itself will not be an absolute vertical increase but a change which is considered rapid in comparison to the overall process dynamics.

In other embodiments the change in an operational parameter can be an impulse, i.e. a sudden change of the parameter with a sudden drop of that change as well. An impulse might result in an increase of more than 30% for less than 15 minutes, preferably less than 5 minutes. Alternatively the change in an operational parameter can also be ramp signal, i.e. gradual build up (or slow down) of a parameter without a leveling.

The nature of step changes, impulses or ramp signals in real processes are well understood in control science.

Furthermore, the measured operational data of the agitation device can be filtered, integrated, averaged and / or processed by a self-learning data processor. The processing of the measured operational parameters can improve the performance of the control system. A self-learning data processor, such as e.g. a neural net or a support vector machine, can automatically detect when a change in the measured data is becoming different from the normal operation.

The control signal is functionally coupled to a flowrate of a withdrawal stream from the gas phase reactor, a processor for the shutdown of the gas phase reactor, a flowrate of a polymerization retarder, a flowrate of an antistatic agent and an alarm system for the operator. If the control system detects the formation of particle agglomerations, it can withdraw selectively material from the gas phase reactor to prevent further agglomeration.

The manipulated variables could also be termed as actuators. Those manipulated variables (or actuators) alone or in combination can influence the particle agglomeration, i.e. the particle agglomeration is retarded.

The alarm system can e.g. comprise a visual and / or acoustic signal on the supervisory screen or a print out. The operator can then act upon the alarm, for instance, by initiating the shutting down of the reactor, so that the particle agglomerations can be removed before they become so large that they would require a large amount of work to remove them from the reactor.

The problem is also solved by gas phase reactor for the catalytic production of polyolefines, in particular polyethylene or polypropylene, comprising a control system according to claims 1 to 4. In one embodiment of the gas phase reactor the agitation device comprises a stirrer.

The feed of a polymerization retarder can comprise CO₂, CO, oxygen, an oxygen containing gas and / or a sulphur containing gas. Mixtures of the polymerization retarders are possible. The feed of an antistatic agent can comprise a ketone (e.g. up to C₇, such e.g. acetone, methyl isobutyl ketone), an alcohol (e.g. C₁ to C₈ alcohols such as methanol, ethanol, isopropanol), water, an amine (e.g. N-alkyl-diethanolamines of formula: CH₃(CH)ₙCH₂-N(CH₂CH₂OH)₂, wherein n is greater than 2), an amide and / or an ester (e.g. an hydroxyester, having at least two free hydroxyl groups, obtained from carboxylic acids having from 8 to 22 carbon atoms and from polyalcohol).

The problem is also solved by a method for catalytic production of polyolefines, in particular a BORSTAR process for producing polyethylene or polypropylene comprising at least one gas phase reactor according to at least one of the claims 5 and 6.

In one embodiment of the method the average pressure in the at least one gas phase reactor is in the range between 10 and 40 bar and the average temperature is in the range between 50 and 105°C, preferably between 60 and 100°C.

In another embodiment, the method carried out using at least one loop reactor providing at least one feed stream for the at least one gas phase reactor.

In a further embodiment the control system is used in an arrangement for the production of polyolefine, in particular polyethylene or polypropylene.

The mentioned embodiments and other embodiments of the control system, the gas phase reactor, the method and the use of the control system will be further described in the following figures which are illustrations of the embodiments without limiting the scope of the present invention.
- Fig. 1: schematically shows an embodiment of a gas phase reactor for polyolefine production with an embodiment of a control system for particle agglomerations;
- Fig. 2: shows an example for a measured operational parameter of an agitation device, i.e. the power of a stirrer;
- Fig. 3: schematically shows an embodiment of a polyolefine production process comprising a gas phase reactor with a control system for particle agglomeration.

In a fluidized bed gas phase reactor 100 an olefin is polymerized in the presence of a polymerization catalyst in an upwards moving gas stream. The reactor typically contains a fluidized bed 10 comprising the growing polymer particles containing the active catalyst located above a fluidization grid.

The polymer bed is fluidized with the help of the fluidization gas 2 comprising the olefin monomer, eventual comonomer(s), eventual chain growth controllers or chain transfer agents, such as hydrogen, and eventual inert gas. The fluidization gas is introduced into an inlet chamber at the bottom of the gas phase reactor 100. To make sure that the gas flow is uniformly distributed over the cross-sectional surface area of the inlet chamber the inlet pipe may be equipped with a flow dividing element as known in the art, e.g. US-A-4933149 and EP-A-684871.

From the inlet chamber the gas flow is passed upwards through a fluidization grid 3 into the fluidized bed 10. The purpose of the fluidization grid 3 is to divide the gas flow evenly through the cross-sectional area of the bed. Sometimes the fluidization grid 3 may be arranged to establish a gas stream to sweep along the reactor walls, as disclosed in WO-A-2005/087361. Other types of fluidization grids 3 are disclosed, among others, in US-A-4578879, EP 600414 and EP-A-721798. An overview is given in Geldart and Bayens: The Design of Distributors for Gas-fluidized Beds, Powder Technology, Vol. 42, 1985.

The fluidization gas passes through the fluidized bed 10. The superficial velocity of the fluidization gas must be higher than the minimum fluidization velocity of the particles contained in the fluidized bed 10, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practice. An overview is given, among others in Geldart: Gas Fluidization Technology, J.Wiley & Sons, 1986. When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the gas phase reactor 100 and cooled in a heat exchanger 6 to remove the heat of reaction. The gas is cooled to a temperature which is lower than that of the bed 10 to prevent the bed 10 from heating because of the reaction. It is possible to cool the gas to a temperature where a part of it condenses. When the liquid droplets enter the reaction zone they are vaporized. The vaporization heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutene, which are at least partially condensed in the cooler.

The gas is then compressed and recycled into the inlet chamber of the gas phase reactor 100. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Among others, WO-A-01/05845 and EP-A-499759 disclose such methods. Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A-00/26258.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

The top part of the gas phase reactor 100 may include a so called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed level.

Also antistatic agent(s) may be introduced into the gas phase reactor if needed. Suitable antistatic agents and methods to use them are disclosed, among others, in US-A-5026795, US-A-4803251, US-A-4532311, US-A-4855370 and EP-A-560035. They are usually polar compounds and include, among others, water, ketones, aldehydes and alcohols.

The reactor may also include a mechanical agitator 1 to further facilitate mixing within the fluidized bed. An example of suitable agitator design is given in EP-A-707513.

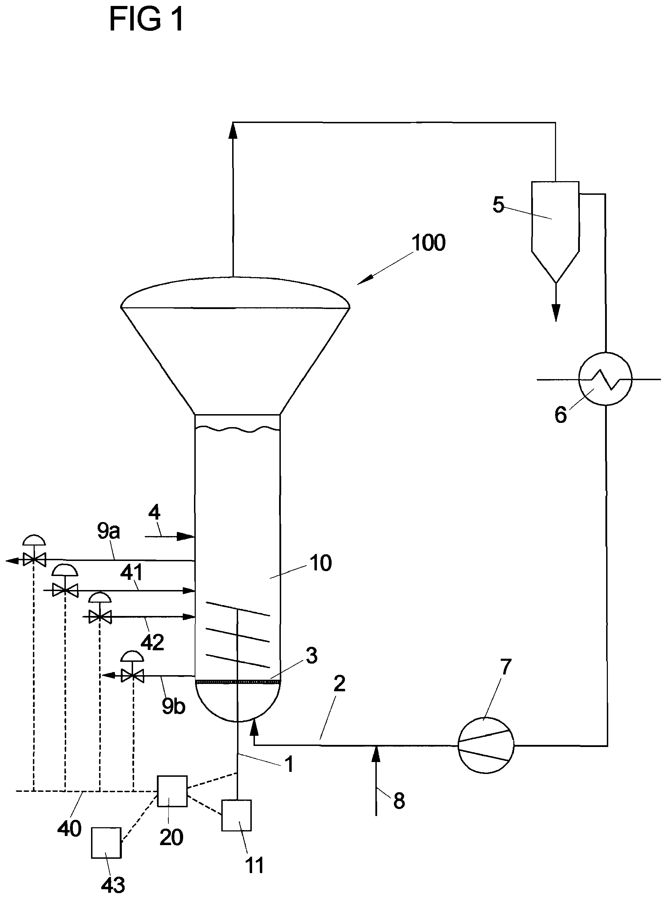

In Fig. 1 a gas phase reactor 100 with a fluidized bed 10 for manufacturing a polyolefine such as e.g. polyethylene or polypropylene is shown. The fluidized bed 10 is situated in the lower part of the gas phase reactor 100. A fluidizing gas stream 2 is injected into the bottom of the gas phase reactor 100 through a fluidization grid 3.

In the upper part (here with a disengaging space having larger diameter than the lower part) of the gas phase reactor 100, the solid particles slow down so that they are separated to a large extent from the gas phase.

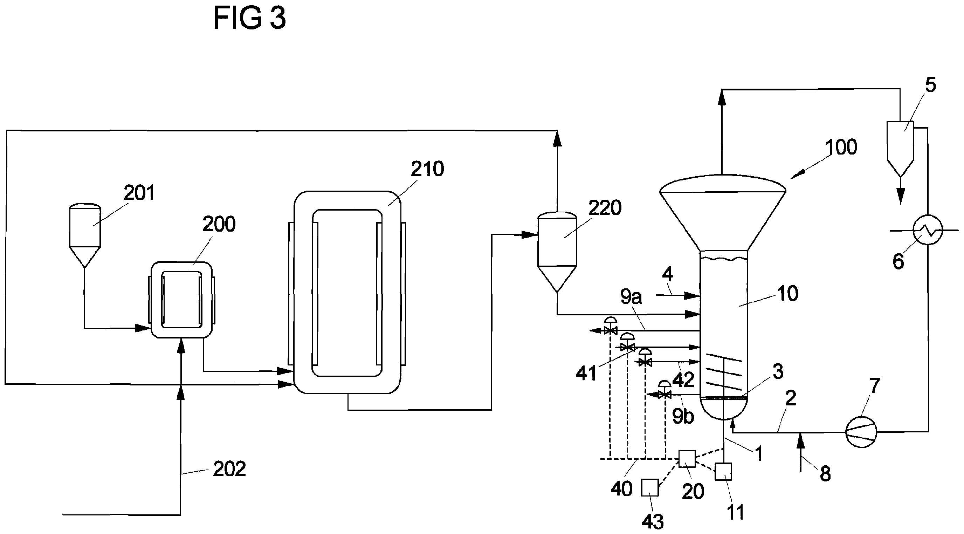

A feed stream 4 to the gas phase reactor 100 comprises e.g. a relatively low molecular weight polymer from a loop reactor 210 (see Fig. 3). The gas phase reactor 100 further comprises product outlets 9a, 9b. A continuous product outlet 9a has a relatively small diameter. The batch product outlet 9b has a relatively large diameter. The smaller continuous product outlet 9a tends to become blocked first with agglomerations. The larger diameter of the batch product outlet 9b allows for rapid emptying of the gas phase reactor 100 should it become necessary.

The continuous product outlet 9a is typically located in the middle of the fluidized bed 10 so that the distance of the continuous product outlet 9a to the fluidization grid 3 is about 50 % of the total height of the fluidized bed 10. The batch product outlet 9b is typically located immediately above the fluidization grid 3. As the particle agglomerates are relatively heavy they tend to fall to the fluidization grid 3. Both 9a and 9b are used in normal operation. Then continuous product outlet 9a withdraws the main part of the polymer, whereas 9b is used to withdraw lumps from region of the fluidization grid 3.

The actuation time of the batch product outlet 9b can be adjusted depending on how much particle agglomerations are formed. If no agglomerations are present then the flow through the batch product outlet 9b may be adjusted to operate at a low frequency, e.g. once an hour.

The person skilled in the art will recognize that the position of the feed stream 4 and the product outlets 9a, 9b on the gas phase reactor 100 in Fig. 1 is exemplary; other embodiments will have different arrangements.

At the top of the gas phase reactor 100 gas, comprising some solid particles, is withdrawn through a gas circulation line and passed through a solid-gas separator 5 (e.g. a cyclone), a heat-exchanger 6 and a circulating gas compressor 7. The pressurized gas and some fresh feed gas 8 then comprise the fluidizing gas stream 2. The person skilled in the art will recognize that this structural description of a gas phase reactor 100 is exemplary so that other configurations are possible.

The fluidized bed 10 of the gas phase reactor 100 comprises an agitation device 1 to impart mechanical energy into the solid-gas mixture of the fluidized bed 10. The agitation device 1 in the depicted embodiment is a stirrer or mixer with a plurality of blades. Other embodiments use a different type of agitation device, e.g. an impeller with a single set of blades or an H-shaped anchor.

The agitation device 1 in the embodiment shown is driven by an electrical motor 11 as a driver. The agitation device 1 and / or the driver 11 of the agitation device 1 are coupled with a detection device 20 (e.g. a computer with inputs for measured data) which measures the at least one operational parameter of the agitation device 1. In this embodiment the operational parameter is the power consumption of the motor 11. In other embodiments operational parameters of the agitation device 1 could be measured at the agitation device 1 itself (e.g. rotational velocity) or at the driver 11 of the agitation device 1 (e.g. torque). In general, any measureable parameter which allows the assessment of the performance or state of the agitation device 1, be it a direct measurement on the agitation device 1 or a connected device such as the driver 11, is considered an operational parameter of the agitation device 1.

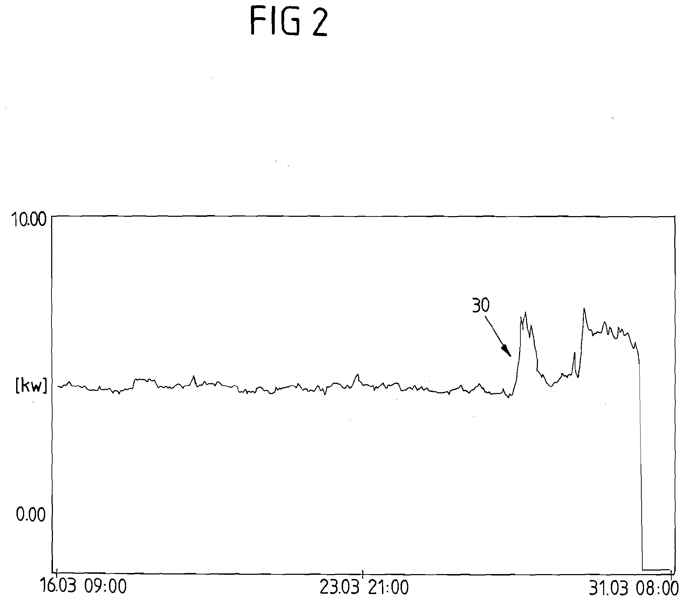

The measurement and processing of operational parameters, such as the power consumption allows the assessment of the particle agglomeration within the gas phase reactor 100, in particular the fluidized bed 10. In Fig. 2 the measured power consumption of the driver 11 of the agitation device 1 in a gas phase reactor 100 as described above in connection with Fig. 1 is shown over approximately 14 days (between March 16, and March 31,). In this instance, the power consumption data is not filtered.

Approximately till March 26, the averaged power consumption is about 5 kW. The fluctuations around this mean value are about 10%. On March 27, the power consumption shows a change 30, i.e. an increase within a relatively short time (ca. 4h) to 7,3 kW (averaged) and remains at this level for about two days. This is an increase of 38% above the averaged power consumption level. The relatively sudden increase in the form of a step change has to be due to some internal changes within the fluidized bed 10. Inspection of the gas phase reactor 100 showed particle agglomeration.

After two days at a level of 7,3 kW, the power consumption dropped, because some particle agglomerations were removed via the batch product outlet 9b, but not to the previous level. On March 29, the power consumption increased to 7,6 kW and the process had to be stopped, i.e. the gas phase reactor 100 was shut down for cleaning. It showed that the product outlets 9a, 9b were clogged with agglomerations and agglomerations were formed around the shaft of the agitation device 1 requiring the cleaning of the equipment.

This shows that a relatively sudden change in the power consumption of the agitation device 1 is an efficient indicator of agglomeration formation.

In other cases the same behavior was observed, indicated by the following data:

| Date | Base level of power consumption | Power consumption after change | Change |
|---|---|---|---|
| 09.03. | 5 kW | 6,5 kW | +30% |
| 07.04. | 5 kW | 6,5 kW | +30% |
| 29.04. | 5,5 kW | 6,7 kW | +22% |
| 21.05. | 5 kW | 6,7 kW | +34% |

A change, as described in this context is not limited to a step change. In other embodiments the change in an operational parameter can be an impulse, i.e. a sudden change of the parameter with a sudden drop of that change as well. An impulse might result in an increase of more than 30% for less than 15 minutes. Alternatively the change in an operational parameter can also be ramp signal, i.e. gradual build up (or slow down) of a parameter without a leveling.

In some cases the changes in power consumption were detected during a grade change (i.e. a change in the type of polymer manufactured) and / or a change in the catalyst.

Therefore, an embodiment of a gas phase reactor 100 as shown in Fig. 1 is coupled with a detection device 20 for detecting a change 30 in at least one operational parameter of the agitation device 1, here the power consumption of the agitation device 1. The detection device 20 receives regularly measurements e.g. of the power consumption and calculates an average value. When a change 30 in the power consumption of e.g. more than 10% above the averaged base line of the operational parameter is detected, a control signal 40 is being generated which is used to operate one or more manipulated variables to influence (e.g. retard, stop) the agglomeration in the gas phase reactor 100. The detection device 20 comprise means for the generation of at least one control signal 40 in dependence of the detected change 30 so that the at least one control signal 40 influences the state of the gas phase reactor 100, the fluidized bed 10 and / or the agitation device 1. The influencing is geared towards the reduction of agglomerations in the gas phase reactor 100 as will be explained below.

Alternatively the control signal 40 can be generated if the change 30 as measured against a predetermined set point exceeds a certain threshold value. In this embodiment the averaging of the measured data is not necessary.

In a further embodiment the detection device 20 comprises self-learning means, such as e.g. a neural net or a support vector machine to distinguish normal operation from abnormal operation.

The change 30 in the operational parameter can be a difference between two values, as mentioned above. But it could also be a change in the rates of the operational parameters. One example would be if the power consumption increases by a certain predetermined relative percentage over a certain predetermined time. This increase of power consumption is also an indicator for particle agglomeration. In other embodiments the vibration, torque and / or the rotational velocity of the agitation device 1 is measured. Measurements can comprise the calculation of averaged measurements or integrated measurements, such as the integral squared error. With these measurements the importance of large but short changes or relatively small but long lasting changes can be assessed as the situation demands.

As in the case of the power consumption, changes 30 in vibration, torque and / or the rotational velocity are indicators of agglomerations in the gas phase reactor 100.

The detection device 20 is part of a control system for the gas phase reactor 100. In a simple embodiment, the generated control signal 40 triggers automatically a shut down of the gas phase reactor 100 for cleaning, i.e. the agglomerations have exceeded a certain threshold which requires the interruption of the process.

In another embodiment the generated control signal 40 triggers automatically an alarm system 43 which comprises a notification (e.g. warning light, print out and / or acoustic signal) for an operator. The operator can then take the appropriate measures, by e.g. shutting down the gas phase reactor 100 for cleaning.

Another possibility is to use the flow rates through the product outlets 9a, 9b as manipulated variables, which can be used alone or in combination with other manipulated variables.

In further embodiment, the control signal 40 acts upon a flow of a polymerization retarder 41, such as CO₂ and / or CO. Furthermore oxygen, an oxygen containing gas and / or a sulphur containing gas can be used as retarders as well. Mixtures of the polymerization retarders are possible.

Since the change, i.e. the step increase in power consumption is an indicator of increased agglomeration, the control system counteracts this by introducing a polymerization retarder and thereby inhibiting the agglomeration of polymer particles. Once the measured power consumption is reduced to set point level, the polymerization retarder is reduced or switched off by the control system.

In addition or alternatively, a flow of an antistatic agent 42, comprising a ketone (e.g. up to C₇, such e.g. acetone, methyl isobutyl ketone), an alcohol (e.g. C₁ to C₈ alcohols such as methanol, ethanol, isopropanol), water, an amine (e.g. N-alkyl-diethanolamines of formula: CH₃(CH)ₙCH₂-N(CH₂CH₂OH)₂, wherein n is greater than 2), an amide and / or an ester (e.g. an hydroxyester, having at least two free hydroxyl groups, obtained from carboxylic acids having from 8 to 22 carbon atoms and from polyalcohol) can be used as manipulated variable to counteract the unwanted particle agglomeration.

In principle, other manipulated variables or combinations of manipulated variables can be functionally coupled with the control signal 40 as long as those manipulated variables influence (e.g. stop, retard) the agglomeration of particles in the gas phase reactor 100, in particular within the fluidized bed 10.

A further embodiment is a process for catalytic production of polyolefines, in particular a BORSTAR process for producing polyethylene or polypropylene, in which at least one embodiment of a gas phase reactor 100 is present.

Gas phase reactors 100 are used in many polyolefine production processes. As an example for such a use a BORSTAR process with such a gas phase reactor 100 is described in Fig. 3 as a non-limiting example. In the art the BORSTAR process is well known, so that for the sake of brevity no detailed description is necessary here.

In Fig. 3 one embodiment of a BORSTAR process for manufacturing polyethylene is shown. This flowsheet and the following description of the flowsheet are exemplary. A person skilled in the art will recognize that variations of the process in respect to the product (e.g. polypropylene), equipment and / or the operating conditions are possible.

The polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step may be conducted in slurry or in gas phase. Preferably prepolymerization is conducted in slurry.

Thus, the prepolymerization step may be conducted in a loop reactor 200. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. The temperature in the prepolymerization step is typically from 0 to 90 °C, preferably from 20 to 70 °C.

A pre-polymerization reactor 200 is used to start the catalytic polymerization process as well as to develop the desired particles. The feed streams to the pre-polymerization reactor 200 are catalysts from a storage 201 and the feedstock 202 for the polyolefine production, e.g. ethylene, diluent, an eventual comonomer and hydrogen. Typical operating conditions of the pre-polymerization reactor 200 are pressures between 50 and 100 bars, temperatures between 50 and 100°C and residence times between 10 to 50 minutes.

The product of the pre-polymerization 200 is the feed stream of a loop reactor 210 which generally produces a low molecular weight polymer with a relative narrow molecular weight distribution. Supercritical propane is used as a diluent resulting in a low solubility of the polyethylene in the diluent.

The polymerization in a first polymerization zone may be conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amount of methane, ethane and/or butane.

The ethylene content in the fluid phase of the slurry may be from 2 to about 50 % by mole, preferably from about 3 to about 20 % by mole and in particular from about 5 to about 15 % by mole. The benefit of having a high ethylene concentration is that the productivity of the catalyst is increased but the drawback is that more ethylene then needs to be recycled than if the concentration was lower.

The temperature in the slurry polymerization is typically from 50 to 115 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization. Such reactors include a continuous stirred tank reactor and a loop reactor 210. It is especially preferred to conduct the polymerization in loop reactor 210. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

It is sometimes advantageous to conduct the slurry polymerization above the critical temperature and pressure of the fluid mixture. Such operation is described in US-A-5391654. In such operation the temperature is typically from 85 to 110 °C, preferably from 90 to 105 °C and the pressure is from 40 to 150 bar, preferably from 50 to 100 bar.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460.

Typically the loop reactor 210 in this embodiment operates at 50 to 100 bars, and at temperatures between 70 and 105°C. The residence time in the loop reactor 210 is between 0,5 and 1 h.

The product of the loop reactor 210 is then passed through a gas-solid separator 220. The gaseous diluent is fed back to the loop-reactor 210 after bringing it back into supercritical state.

The solids from the separator 220 are fed into the gas phase reactor 100 in which high molecular weight polymer within an accurate molecular weight distribution is produced. The gas phase reactor 100 with alternative embodiments and the detection device 20 is described in connection with Fig. 1 so that reference is made to said description.

The embodiment of the gas phase reactor 100 shown in Fig. 3 typically operates at a lower pressure than the loop reactor 210, e.g. between 10 and 35 bar. The temperatures are in the same range as in the loop reactor 210, e.g. between 70 and 90°C. The residence time is between 1 to 3h.

In the embodiments shown in Fig. 3 the gas phase reactor 100 is integrated into the BORSTAR process. The detection device 20 is used to measure an operational parameter of the agitation device 1, i.e. the power consumption. This information is used to generate a control signal which can act on feed lines 41, 42 for different substances controlling the particle agglomeration behavior within the gas phase reactor 100. The control signal 40 can also act on two outlet streams 9a, 9b withdrawing polymer product from the gas phase reactor 100. The person skilled in the art will recognize that control scheme of the gas phase reactor 100 can use one or more manipulated variables. It is also possible that the detection device 20 is coupled with a mathematical model of the process allowing model predictive control.

In any case, a change 30 in the power consumption is used as an indicator for particle agglomeration. The control signals 40 provide measures to act against this particle agglomeration.
- 1: Agitation device
- 2: Fluidizing gas stream
- 3: Fluidization grid
- 4: Feed stream to gas phase reactor
- 5: Gas-solid separator
- 6: Heat exchanger
- 7: Circulating gas compressor
- 8: Fresh gas supply line
- 9a: Continuous product outlet
- 9b: Batch product outlet

- 10: Fluidized bed
- 11: Motor for agitation device

- 20: Detection device

- 30: Change in operational parameter of the agitation device

- 40: Control signal
- 41: Flow of polymerization retarder
- 42: Flow of antistatic agent
- 43: Alarm system

- 100: Gas phase reactor

- 200: Pre-polymerization reactor
- 202: Feed flow to pre-polymerization reactor
- 201: Catalyst storage
- 210: Loop reactor
- 220: Gas-solid separator

## Claims

1. Control system for a fluidized bed gas phase reactor (100) for the catalytic production of polyolefines having at least one agitation device (1) in a fluidized bed (10) in a gas phase reactor (100),
**characterized by**
a detection device (20) for detecting a change (30) in at least one operational parameter of the agitation device (1),
wherein the change (30) is selected from the vibration, torque and / or the power consumption of the agitation device (1),
the detection device (20) comprising means for the generation of at least one control signal (40) in dependence on the change (30),
the control signal (40) acting on a manipulated variable of the gas phase reactor (100) and/or the fluidized bed (10) to influence the formation of particle agglomerations in the gas phase reactor (100) and / or the removal of particle agglomerations from the gas phase reactor (100),
wherein the control signal (40) is functionally coupled to a flowrate of a withdrawal stream (9a, 9b) from the gas phase reactor (100), a processor for the shutdown of the gas
phase reactor, a flowrate of a polymerization retarder (41), a flowrate of a antistatic agent (42) and an alarm system (43) for an operator.

2. Control system according to claim 1, wherein the change (30) in the at least one operational parameter is an absolute or relative deviation from previously measured operational data of the agitation device (1) by a predefined amount or an absolute or relative deviation from previously measured operational data of the agitation device (1) by a predefined amount within a predefined time and / or a rate of change in the operational data of the agitation device (1), the change (30) exceeding a predefined criterion.

3. Control system according to claim 1 or 2, wherein the change (30) in the at least one operational parameter is a step change in the power consumption of the agitation device (1) of more than 10% over a period of more than 30 minutes, an impulse or a ramp signal

4. Control system according to any of the preceding claims, wherein the measured operational data of the agitation device (1) is filtered, integrated, averaged and / or processed by a self-learning data processor.

5. Gas phase reactor for the catalytic production of polyolefines, in particular polyethylene or polypropylene, having at least one agitation device (1) in a fluidized bed (10) and comprising a control system according to at least one of the claims 1 to 4.

6. Gas phase reactor according to claim 5, wherein the agitation device (1) comprises a stirrer.

7. A Method for a catalytic production of polyolefines, wherein the method is carried out in at least one gas phase reactor (100) having at least one agitation device (1) in a fluidized bed (10) in the gas phase reactor (100), and comprising a control system the method comprising the steps of
- detecting a change (30) in at least one operational parameter of the agitation device (1) by a detection device (20), wherein the change (30) is selected from the vibration, torque and / or the power consumption of the agitation device (1),
- generating at least one control signal (40) in dependence on the change (30) by the detection device (20), wherein the control signal (40) acts on a manipulated variable of the gas phase reactor (100) and/or the fluidized bed (10) to influence the formation of particle agglomerations in the gas phase reactor (100) and / or the removal of particle agglomerations from the gas phase reactor (100), and
- wherein the control signal (40) is functionally coupled to a flowrate of a withdrawal stream (9a, 9b) from the gas phase reactor (100), a processor for the shutdown of the gas phase reactor, a flowrate of a polymerization retarder (41), a flowrate of a antistatic agent (42) and an alarm system (43) for an operator.

8. Method according to claim 7, wherein the average pressure in the at least one gas phase reactor (100) is between 10 and 40 bar and the average temperature is in the range between 60 and 110°C.

9. Method according to claim 7 or 8, wherein the process is carried out by using at least one loop reactor (210) providing at least one feed stream for the at least one gas phase reactor (100).

10. Method according to any of the claims 7 to 8, wherein the polymerization retarder comprises CO₂, CO, oxygen, an oxygen containing gas and / or a sulphur containing gas.

11. Method according to any of the claims 7 to 10, wherein the antistatic agent (42) comprises a ketone, an alcohol, water, an amine, an amide and / or an ester.

12. Use of a control system in the catalytic production of polyolefines in a fluidized bed gas phase reactor (100) having at least one agitation device (1) in a fluidized bed (10), wherein the control system comprises
a detection device (20) for detecting a change (30) in at least one operational parameter of the agitation device (1),
wherein the change (30) is selected from the vibration, torque and / or the power consumption of the agitation device (1),
the detection device (20) comprising means for the generation of at least one control signal (40) in dependence on the change (30),
the control signal (40) acting on a manipulated variable of the gas phase reactor (100) and/or the fluidized bed (10) to influence the formation of particle agglomerations in the gas phase reactor (100) and / or the removal of particle agglomerations from the gas phase reactor (100),
wherein the control signal (40) is functionally coupled to a flow rate of a withdrawal stream (9a, 9b) from the gas phase reactor (100), a processor for the shutdown of the gas phase reactor, a flowrate of a polymerization retarder (41), a flowrate of a antistatic agent (42) and an alarm system (43) for an operator.

## Patentansprüche

1. Steuerungssystem für einen Wirbelschicht-Gasphasenreaktor (100) für die katalytische Herstellung von Polyolefinen mit mindestens einer Rührvorrichtung (1) in einer Wirbelschicht (10) in einem Gasphasenreaktor (100),
**gekennzeichnet durch**
eine Erfassungsvorrichtung (20) zum Erfassen einer Änderung (30) in mindestens einem Betriebsparameter der Rührvorrichtung (1),
wobei die Änderung (30) aus der Vibration, dem Drehmoment und/oder dem Stromverbrauch der Rührvorrichtung (1) ausgewählt ist,
wobei die Erfassungsvorrichtung (20) Mittel zum Erzeugen mindestens eines Steuersignals (40) in Abhängigkeit von der Änderung (30) umfasst,
wobei das Steuersignal (40) auf eine Stellgröße des Gasenphasenreaktors (100) und/oder der Wirbelschicht (10) wirkt, um die Bildung von Partikelagglomerationen in dem Gasphasenreaktor (100) und/oder die Beseitigung von Partikelagglomerationen aus dem Gasphasenreaktor (100) zu beeinflussen,
wobei das Steuersignal (40) mit einer Strömungsgeschwindigkeit eines Entnahmestroms (9a, 9b) aus dem Gasphasenreaktor (100), einem Prozessor zum Abschalten des Gasphasenreaktors, einer Strömungsgeschwindigkeit eines Polymerisationsverzögerers (41), einer Strömungsgeschwindigkeit eines Antistatikmittels (42) und einer Alarmanlage (43) für einen Bediener funktionell gekoppelt ist.

2. Steuerungssystem nach Anspruch 1, wobei die Änderung (30) in dem mindestens einen Betriebsparameter eine absolute oder relative Abweichung von zuvor gemessenen Betriebsdaten der Rührvorrichtung (1) um einen vordefinierten Betrag oder eine absolute oder relative Abweichung von zuvor gemessenen Betriebsdaten der Rührvorrichtung (1) um einen vordefinierten Betrag innerhalb einer vordefinierten Zeit und/oder eine Änderungsgeschwindigkeit der Betriebsdaten der Rührvorrichtung (1) ist, wobei die Änderung (30) ein vordefiniertes Kriterium überschreitet.

3. Steuerungssystem nach Anspruch 1 oder 2, wobei die Änderung (30) in dem mindestens einen Betriebsparameter eine schrittweise Änderung im Stromverbrauch der Rührvorrichtung (1) von mehr als 10% über einen Zeitraum von mehr als 30 Minuten, ein Impuls oder ein Rampensignal ist.

4. Steuerungssystem nach einem der vorhergehenden Ansprüche, wobei die gemessenen Betriebsdaten der Rührvorrichtung (1) durch eine selbstlernende Datenverarbeitungseinrichtung gefiltert, integriert, gemittelt und/oder verarbeitet werden.

5. Gasphasenreaktor für die katalytische Herstellung von Polyolefinen, insbesondere Polyethylen oder Polypropylen, mit mindestens einer Rührvorrichtung (1) in einer Wirbelschicht (10) und mit einem Steuerungssystem nach mindestens einem der Ansprüche 1 bis 4.

6. Gasphasenreaktor nach Anspruch 5, wobei die Rührvorrichtung (1) ein Rührwerk umfasst.

7. Verfahren für eine katalytische Herstellung von Polyolefinen, wobei das Verfahren in mindestens einem Gasphasenreaktor (100) mit mindestens einer Rührvorrichtung (1) in einer Wirbelschicht (10) in dem Gasphasenreaktor (100) durchgeführt wird, und umfassend ein Steuerungssystem,
wobei das Verfahren die folgenden Schritte umfasst:
- Erfassen einer Änderung (30) in mindestens einem Betriebsparameter der Rührvorrichtung (1) durch eine Erfassungsvorrichtung (20), wobei die Änderung (30) aus der Vibration, dem Drehmoment und/oder dem Stromverbrauch der Rührvorrichtung (1) ausgewählt ist,
- Erzeugen mindestens eines Steuersignals (40) in Abhängigkeit von der Änderung (30) durch die Erfassungsvorrichtung (20), wobei das Steuersignal (40) auf eine Stellgröße des Gasphasenreaktors (100) und/oder der Wirbelschicht (10) wirkt, um die Bildung von Partikelagglomerationen in dem Gasphasenreaktor (100) und/oder die Beseitigung von Partikelagglomerationen aus dem Gasphasenreaktor (100) zu beeinflussen, und
- wobei das Steuersignal (40) mit einer Strömungsgeschwindigkeit eines Entnahmestroms (9a, 9b) aus dem Gasphasenreaktor (100), einem Prozessor zum Abschalten des Gasphasenreaktors, einer Strömungsgeschwindigkeit eines Polymerisationsverzögerers (41), einer Strömungsgeschwindigkeit eines Antistatikmittels (42) und einer Alarmanlage (43) für einen Bediener funktionell gekoppelt ist.

8. Verfahren nach Anspruch 7, wobei der durchschnittliche Druck in dem mindestens einen Gasphasenreaktor (100) zwischen 10 und 40 bar beträgt und die durchschnittliche Temperatur im Bereich zwischen 60 und 110°C liegt.

9. Verfahren nach Anspruch 7 oder 8, wobei der Prozess mit mindestens einem Schleifenreaktor (210) durchgeführt wird, der mindestens einen Einsatzstrom für den mindestens einen Gasphasenreaktor (100) bereitstellt.

10. Verfahren nach einem der Ansprüche 7 bis 8, wobei der Polymerisationsverzögerer CO₂, CO, Sauerstoff, ein sauerstoffhaltiges Gas und/oder ein schwefelhaltiges Gas umfasst.

11. Verfahren nach einem der Ansprüche 7 bis 10, wobei das Antistatikmittel (42) Keton, einen Alkohol, Wasser, ein Amin, ein Amid und/oder einen Ester umfasst.

12. Verwendung eines Steuerungssystems bei der katalytischen Herstellung von Polyolefinen in einem Wirbelschicht-Gasphasenreaktor (100) mit mindestens einer Rührvorrichtung (1) in einer Wirbelschicht (10), wobei das Steuerungssystem Folgendes umfasst:
eine Erfassungsvorrichtung (20) zum Erfassen einer Änderung (30) in mindestens einem Betriebsparameter der Rührvorrichtung (1),
wobei die Änderung (30) aus der Vibration, dem Drehmoment und/oder dem Stromverbrauch der Rührvorrichtung (1) ausgewählt ist,
wobei die Erfassungsvorrichtung (20) Mittel zum Erzeugen mindestens eines Steuersignals (40) in Abhängigkeit von der Änderung (30) umfasst,
wobei das Steuersignal (40) auf eine Stellgröße des Gasenphasenreaktors (100) und/oder der Wirbelschicht (10) wirkt, um die Bildung von Partikelagglomerationen in dem Gasphasenreaktor (100) und/oder die Beseitigung von Partikelagglomerationen aus dem Gasphasenreaktor (100) zu beeinflussen,
wobei das Steuersignal (40) mit einer Strömungsgeschwindigkeit eines Entnahmestroms (9a, 9b) aus dem Gasphasenreaktor (100), einem Prozessor zum Abschalten des Gasphasenreaktors, einer Strömungsgeschwindigkeit eines Polymerisationsverzögerers (41), einer Strömungsgeschwindigkeit eines Antistatikmittels (42) und einer Alarmanlage (43) für einen Bediener funktionell gekoppelt ist.

## Revendications

1. Système de contrôle pour un réacteur à phase gazeuse en lit fluidisé (100) pour la production catalytique de polyoléfines ayant au moins un dispositif d'agitation (1) en lit fluidisé (10) dans un réacteur à phase gazeuse (100),
**caractérisé par**
un dispositif de détection (20) pour détecter un changement (30) dans au moins un paramètre opérationnel du dispositif d'agitation (1),
dans lequel le changement (30) est choisi parmi la vibration, le couple et/ou la consommation d'énergie du dispositif d'agitation (1),
le dispositif de détection (20) comprenant des moyens pour la génération d'au moins un signal de commande (40) en fonction du changement (30),
le signal de commande (40) agissant sur une variable manipulée du réacteur à phase gazeuse (100) et/ou du lit fluidisé (10) pour influencer la formation d'agglomérations particulaires dans le réacteur à phase gazeuse (100) et/ou le retrait des agglomérations particulaires du réacteur à phase gazeuse (100),
dans lequel le signal de commande (40) est couplé fonctionnellement à un débit d'un flux de retrait (9a, 9b) du réacteur à phase gazeuse (100), un processeur pour l'extinction du réacteur à phase gazeuse, un débit d'un retardateur de polymérisation (41), un débit d'un agent antistatique (42) et un système d'alarme (43) pour un opérateur.

2. Système de contrôle selon la revendication 1, dans lequel le changement (30) dans l'au moins un paramètre opérationnel est un écart absolu ou relatif par rapport à la donnée opérationnelle préalablement mesurée du dispositif d'agitation (1) d'un montant prédéfini ou un écart absolu ou relatif par rapport à la donnée opérationnelle préalablement mesurée du dispositif d'agitation (1) d'un montant prédéfini à l'intérieur d'une durée prédéfinie et/ou d'un taux de changement au niveau de la donnée opérationnelle du dispositif d'agitation (1), le changement (30) excédant un critère prédéfini.

3. Système de contrôle selon la revendication 1 ou 2, dans lequel le changement (30) dans l'au moins un paramètre opérationnel est un changement par étape de la consommation d'énergie du dispositif d'agitation (1) de plus de 10 % sur une période de plus de 30 minutes, d'une impulsion ou d'un signal de rampe.

4. Système de contrôle selon l'une quelconque des revendications précédentes, dans lequel la donnée opérationnelle mesurée du dispositif d'agitation (1) est filtrée, intégrée, calculée en moyenne et/ou traitée par un processeur de données d'autoapprentissage.

5. Réacteur à phase gazeuse pour la production catalytique des polyoléfines, en particulier de polyéthylène ou de polypropylène, ayant au moins un dispositif d'agitation (1) en lit fluidisé (10) et comprenant un système de contrôle selon au moins une des revendications 1 à 4.

6. Réacteur à phase gazeuse selon la revendication 5, dans lequel le dispositif d'agitation (1) comprend un agitateur.

7. Procédé pour une production catalytique de polyoléfines, dans lequel le procédé est réalisé dans au moins un réacteur à phase gazeuse (100) ayant au moins un dispositif d'agitation (1) en lit fluidisé (10) dans le réacteur à phase gazeuse (100), et comprenant un système de contrôle ; le procédé comprenant les étapes de :
- détection d'un changement (30) dans au moins un paramètre opérationnel du dispositif d'agitation (1) par un dispositif de détection (20), dans lequel le changement (30) est choisi parmi la vibration, le couple et/ou la consommation d'énergie du dispositif d'agitation (1),
- génération d'au moins un signal de commande (40) en fonction du changement (30) par le dispositif de détection (20), dans lequel le signal de commande (40) agit sur une variable manipulée du réacteur à phase gazeuse (100) et/ou du lit fluidisé (10) pour influencer la formation d'agglomérations particulaires dans le réacteur à phase gazeuse (100) et/ou le retrait des agglomérations particulaires du réacteur à phase gazeuse (100), et
- dans lequel le signal de commande (40) est couplé fonctionnellement à un débit d'un flux de retrait (9a, 9b) du réacteur à phase gazeuse (100), un processeur pour l'extinction du réacteur à phase gazeuse, un débit d'un retardateur de polymérisation (41), un débit d'un agent antistatique (42) et un système d'alarme (43) pour un opérateur.

8. Procédé selon la revendication 7, dans lequel la pression moyenne dans l'au moins un réacteur à phase gazeuse (100) est située entre 10 et 40 bar et la température moyenne est comprise dans la plage entre 60 et 110 °C.

9. Procédé selon la revendication 7 ou 8, dans lequel le procédé est réalisé en utilisant au moins un réacteur à boucle (210) fournissant au moins un flux d'alimentation pour l'au moins un réacteur à phase gazeuse (100).

10. Procédé selon l'une quelconque des revendications 7 à 8, dans lequel le retardateur de polymérisation comprend du CO₂, du CO, de l'oxygène, un gaz contenant de l'oxygène et/ou un gaz contenant du soufre.

11. Procédé selon l'une quelconque des revendications 7 à 10, dans lequel l'agent antistatique (42) comprend une cétone, un alcool, de l'eau, une amine, un amide et/ou un ester.

12. Utilisation d'un système de contrôle dans la production catalytique de polyoléfines dans un réacteur à phase gazeuse en lit fluidisé (100) ayant au moins un dispositif d'agitation (1) en lit fluidisé (10), dans lequel le système de contrôle comprend :
un dispositif de détection (20) pour détecter un changement (30) dans au moins un paramètre opérationnel du dispositif d'agitation (1),
dans lequel le changement (30) est choisi parmi la vibration, le couple et/ou la consommation d'énergie du dispositif d'agitation (1),
le dispositif de détection (20) comprenant des moyens pour la génération d'au moins un signal de commande (40) en fonction du changement (30),
le signal de commande (40) agissant sur une variable manipulée du réacteur à phase gazeuse (100) et/ou du lit fluidisé (10) pour influencer la formation d'agglomérations particulaires dans le réacteur à phase gazeuse (100) et/ou le retrait des agglomérations particulaires du réacteur à phase gazeuse (100),
dans lequel le signal de commande (40) est couplé fonctionnellement à un débit d'un flux de retrait (9a, 9b) du réacteur à phase gazeuse (100), un processeur pour l'extinction du réacteur à phase gazeuse, un débit d'un retardateur de polymérisation (41), un débit d'un agent antistatique (42) et un système d'alarme (43) pour un opérateur.
